(19) Europäisches Patentamt

European Patent Office

Office européen des brevets

(11) **EP 4 050 860 A1**

## (12) EUROPEAN PATENT APPLICATION

(43) Date of publication:
**31.08.2022 Bulletin 2022/35**

(21) Application number: **21159808.1**

(22) Date of filing: **28.02.2021**

(51) International Patent Classification (IPC):
**H04L 29/06** (2006.01) **A61B 5/103** (2006.01)
**H04W 12/06** (2021.01)

(52) Cooperative Patent Classification (CPC):
**G07C 9/00; H04L 63/0861; H04L 67/535;
H04W 12/06**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Torrealba Villasana, Fidel Alejandro
Edinburgh EH2 3JG (GB)**

(72) Inventor: **Torrealba Villasana, Fidel Alejandro
Edinburgh EH2 3JG (GB)**

(54) **METHODS AND SYSTEMS TO VALIDATE THE IDENTITY OF THE USER GENERATING ACTIVITY TRACKING DATA OR GPS DATA WITH A MOBILE OR WEARABLE DEVICE**

(57)     The usage of mobile devices and wearable devices (such as fitness trackers from Fitbit ®, Apple Watch®, Garmin ®, etc.) has increased over the last decade. Simultaneously, smartphones have become powerful and incorporated sensors that allow developers to implement software applications that provide fitness tracking or GPS tracking capabilities. In most cases, to start using mobile and wearable devices, the user needs to register those devices under the data processing systems of the device's vendor, and any data generated from the device is assumed to be generated by that user, but that assumption is not always correct. This invention provides a way to verify the identity of the users that continuously generate activity, fitness, or location (GPS) tracking data with mobile and wearable devices. That verification is done by requesting photos or videos of the user in possession of the tracking device, when the device has generated new data.

EP 4 050 860 A1

## Description

### Field of the invention

This invention relates to tracking technologies that generate data that need to be linked to a specific user identity, specifically to activity and fitness tracking devices and to GPS tracking devices. This invention ensures the verification of that user identity to enable different providers to confidently consume that data to customize their offer of products and services, especially fitness, health, and insurance providers.

### Background

The usage of mobile devices that incorporate several sensors to provide multiple and integrated functionalities has been rising since the 1980s. With the massive worldwide adoption of mobile devices, several vendors have developed and sold different technologies that are now sold as mobile devices, such as GPS mobile devices (Or PDAs), mobile phones, activity trackers, and wearable devices. As mobile phones became smarter, those smartphones incorporated several movement sensors, allowing the development of mobile apps for the user to track his physical activity level and his detailed location changes by using native GPS capabilities. Apart from mobile apps, the user can still use specialized activity and fitness tracking, wearable devices, or dedicated GPS devices with embedded movement sensors. Typically, an activity tracker device and a GPS tracking device may be used together with a mobile app that will allow the user to configure the tracking device from his smartphone. The user is typically requested to create a "user account" with his tracking device vendor and provide necessary identity details to activate the vendor's services. After creating the initial user account, there is no practical way to ensure that the data generated with the tracking device has been generated by the user associated with the device. Having no way to ensure the data ownership makes such data unreliable to be used by the vendors or third parties to offer benefits and services to the user.

### Summary of Invention

The problem to solve is the inexistence of practical and scalable methods or processes to validate the user's identity generating data with a tracking mobile device such as a mobile smartphone running an activity or GPS tracking app, a wearable, or a GPS dedicated device. As there is no scalable way to ensure the mentioned user's identity, the data generated with the tracking device lacks the required authenticity to allow health, fitness, wellbeing, and insurance providers to use it to generate customized and valuable offers and services.

There are currently different technologies and methods used by several mobile apps to allow service providers to validate the identity claimed by a user accessing their services. Those technologies and methods follow what is known as "KYC" (Know Your Customer), which are guidelines mainly established in the financial industry to allow institutions to validate the user identity before initiating a business relationship. KYC is broadly used in financial services as part of anti-money laundry efforts. There is not a "KYC" practice for activity, fitness, or GPS data.

The invention therein provides systems and methods to provide ongoing validation of the identity of the user generating data with a tracking device. Examples of those devices are, without being not limited to: wearable activity trackers, wearable fitness trackers, GPS tracking devices, and mobile phones running a GPS tracking or activity or fitness tracking application. The systems and methods therein rely on the availability of a digital camera, either embedded in the tracking device itself or as part of a supporting device (such as a mobile phone) that can connect to the tracking device and that the user can use to interact with that tracking device. At a high level, this invention proposes to use a government-issued photo ID provided by the user as proof of identity and capturing a picture or video of the user's face to compare it against that provided ID. Once the user identity has been validated once, subsequent validations are done by requesting new pictures or videos of the user's face, which can be compared with the previously provided photo ID or previously taken videos or photos of the same user. The described identity validation process will be executed to allow the user to register data under his name with a tracking device. Then it will be performed recurrently, or at least once more, to ensure the same user is overtime generating data with the same tracking device.

Additional to the methods and systems described to ensure the identity of the user of a tracking device, the invention therein includes the way to use the data generated by that user to generate the "Certified Fitness Pair" (CFP) and the "Certified Movement Data" (CMD). The CFP is calculated from the user's fitness data generated by a tracking device for which the user's identity has been verified. The CMD forms a summary that reflects qualities of GPS tracking data of the user from a tracking device for which the user's identity has been validated.

### Advantageous Effects of Invention

The main advantage of the invention therein is to provide a high level of confidence in the ownership of the data coming from a given tracking device, allowing service providers to personalize offers of products and services for the user that owns and generated that data.

## Descriptions of Drawings

The invention will be described in detail referencing the following drawings of which:

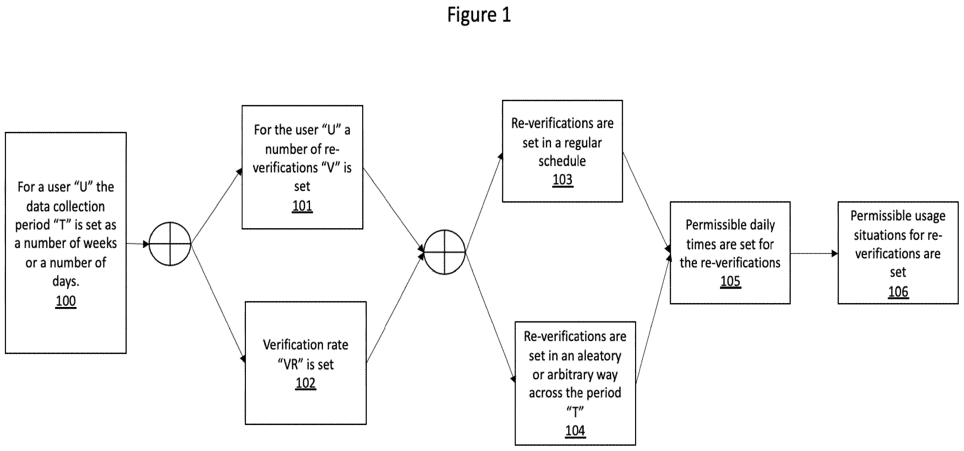

- Figure 1 is a flowchart, titled and therein referenced as **Configuration for Identify re-verification process.** Figure 1 shows the process to set the parameters to make the identity varication work.

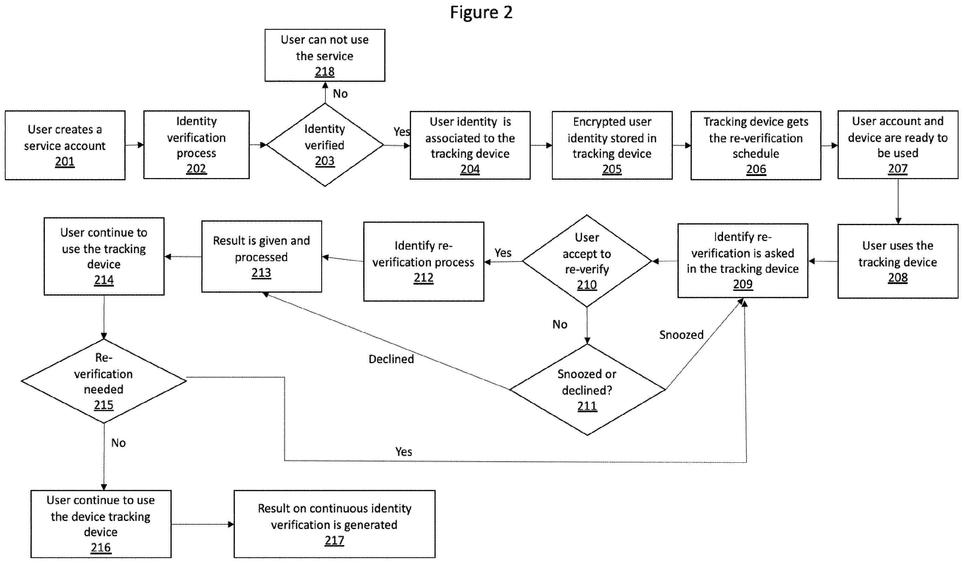

- Figure 2 is a flowchart, titled and therein referenced as **Continuous Usage and Identity verification process.** Figure 2 shows the process of regular usage of the tracking device and how the identity verification processes happen during such use;

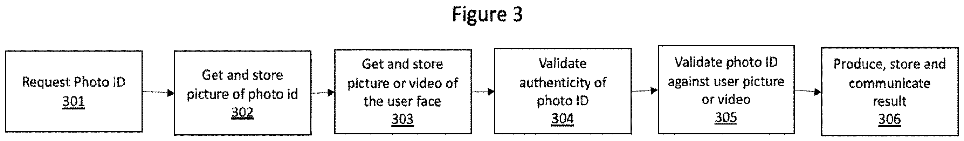

- Figure 3 is a flowchart, titled and therein referenced as **Initial identity verification process.** Figure 3 indicates the steps for identity verification to happen.

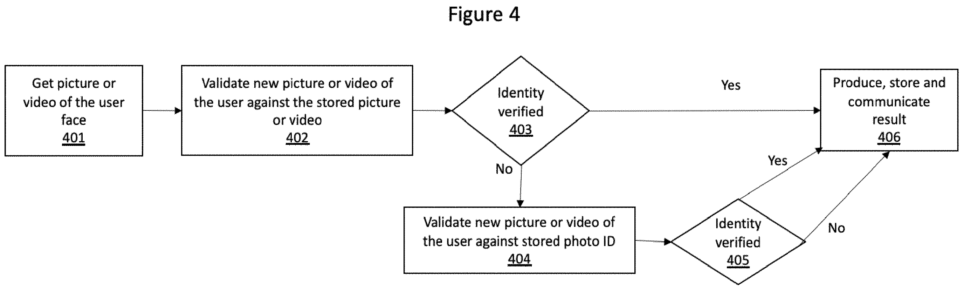

- Figure 4 is a flowchart, titled and therein referenced as **Scheduled identity re-verification process.** Figure 4 shows how the re-verification of the user identity happens, which may occur at any time once the user started to generate data with the tracking device.

- Figure 5 is a flowchart, titled and therein referenced as **Generating the Certified Fitness Pair,** which will be described later in this document.

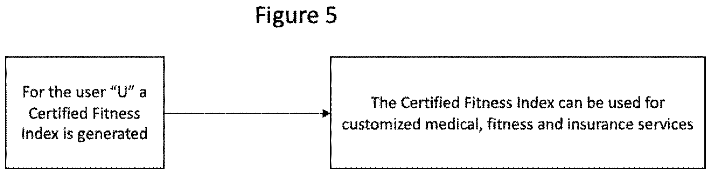

- Figure 5 is a flowchart, titled and therein referenced as **Generating the certified movement data,** which will be described later in this document.

## Detailed description

The term *tracking device* is used in this document to refer to smart mobile phones running an application with activity tracking, fitness tracking, and GPS tracking functionalities; as well as to refer to wearable activity tracking devices, fitness tracking, and GPS tracking functionalities; and to refer to dedicated GPS tracking units that can be used on people or motorized vehicles.
The term *associated digital camera* is used in this document refers to a digital camera that can be embedded as part of the tracking device or a digital camera that is part of another device that needs to be used for the user to interact with the tracking device. For example, the *associated digital camera* may refer to the digital camera of a smartphone running a fitness tracking application, to a digital camera embedded in a wearable activity tracking device, to a digital camera embedded as part of a GPS tracking device, or to a digital camera embedded in a smartphone that is required to run a software program or application to interact with the tracking device (being the tracking device a wearable device or a dedicated GPS tracking device).
The term *user account* refers to the account created by the user of a tracking device in the tracking device vendor's systems to register his device's ownership. The data to be generated with the device will be associated with the user's identity from that registration.
The term *identity certified* is used in this document to indicate when the identity of the user generating data has been verified. This verification happens by recurrently asking proof of identity of the person in possession of the tracking device generating such data.

## Configuration process to deliver the service

This configuration process can be done through a user interacting with software to set the configuration rules or by writing the software to operate under a given configuration statically. This configuration process will determine how and when the identity verification process will be activated.
The configuration process to deliver the service will be run for every user registering a tracking device when the service provider intends to recurrently validate that user's identity during a fixed period.
For any user, a specific number of days or a specific number of weeks (defined as "T" for both cases) is set as the data collection period **100**. Once the period for "identity certified" data collection is set, the number of identity re-verifications is set, either because it is explicitly given **101**, or because it is calculated given the "Verification rate" (VR) **102**. *Verification Rate* is the result of dividing the number of re-verifications between the value of "T", therefore once the Verification Rate and "T" are given, the number of re-verifications "V" is the product of multiplying *VR x T.* Once the number of re-verifications is known, those re-verifications are scheduled to happen on specific days of the "T" period, on regularly scheduled days (For example the same day of every week) **103,** or n days that are aleatory and distributed across the "T" period (this constitute an irregular schedule that cannot be guessed by most users) **104.** Given the dates for the re-verifications to happen, permissible times of the day are set for the re-verification to be requested to the user **105,** and permissible situations of the tracking device usage **106.**

Permissible situations of the tracking device usage refer to any time that does interrupt the user when he is known to be using the tracking device, and when requesting the identity re-verification does not pose any risk to the user's physical integrity. Example of permissible situations include and are not limited to:

- When a tracking device is tracking daily activity, which is not actively tracking a specific sports activity or workout, any time.
- When a tracking device has finished tracking a sports activity or workout, and it is not tracking another sport activity or workout.
- When a GPS tracking device has finished tracking a session of location changes, and it is not tracking another session of location changes.

Once a specific user wants to use a tracking device and generate "identity certified" data with it, he will create a service account for his data to be collected and his identity to be verified **201.**

## Initial identity verification process

The process to be described in this section may happen entirely in the tracking device, when it has all the sensors and means to execute this process, or a supporting device or smartphone being used to interact with and register the tracking device.

For a new user to register a tracking device and start generating data with it, his identity needs to be verified. So, during the registration process, a government-issued photo ID is required **301,** for then to proceed to take pictures of it with the *associated digital camera* **302** (pictures are requested and taken for the front and back of the ID, or any page of it containing relevant information and data) . Once the pictures of the photo ID are taken, then a video or picture of the face of the user are requested and taken **303.** The photo ID's authenticity is verified by using available services from different government or private institutions (from the specific government that has issued the photo ID). The picture or video from the user's face is used to validate the user's liveness and to match the user's face against the photo in the given photo ID **305** to certify the given photo ID belongs to the user, and in that way validate the user identity. The result of the user identity validation is stored.

## Scheduled identity re-verification process

According to the Configuration process to deliver the service, each user will be subject to a re-verification schedule, allowing the service provider to re-verify the user's identity. As the user has registered this tracking device under a user account in the service provider's systems, the identities re-verifications will be requested. For each re-verification, a new picture or video of the user are requested **401,** for what will be necessary to generate them directly from the *associated digital camera,* and it won't be possible to use a previously stored media. Once the picture or video of the user is provided, they are validated against a previously provided picture or video that were used to validate his identity **402,** and in the case that the validation could not be done against that previously provided media, then it will be done against the pictures of the originally provided photo ID **404.** Once the validation options are executed, and a result is generated, that result is stored in the systems of the service provider, and it will be communicated to the user **406.** For any re-verification results, the user will be able to comment on it in the user account provided by the service provider's systems or by contacting the service provider's customer support by chat or phone.

## Continuous usage and identity verification process

Here is described the usage cycle, where the user creates a user account to register his tracking device in the service provider systems, allowing that service provider to continuously verify the user's identity as the user generates data with the tracking device.

First, the user will generate a user's account **201,** which will be linked with his tracking device. That user account can be created in the tracking device itself when it provides the means and interfaces for the user to interact and provide all the necessary details. Alternatively, the user's account can be created using a smartphone with an app or interface for the user to create it and link or connect the tracking device to that account. As part of the process to create the user account, the initial Identity verification process is executed **202** (as described in the section *initial Identity verification process* of this document). If the user's identity cannot be verified **203,** then the account creation process stops, the user cannot finish creating his user account and cannot use the service **218.** If the user's identity is verified, then that identity is associated with the tracking device **204.** That association is stored in encrypted and stored in the tracking device **205** and the service providers' systems. Once the user's identity is associated with the tracking device, then the tracking re-verification schedule is stored in the tracking device **206,** as that scheduled has been set by executing the *Configuration process to deliver the service* described in this document. Once the user has created his user's account, validated his identity, and the tracking device has been associated with that identity, then the tracking device is ready to be used **207.** The user now can recurrently use the tracking device **208.**

As the user continues to use the tracking device, which has the re-verification schedule and an internal clock that counts the current time and date, the identity re-verification is required in the tracking device at the next scheduled time **209.** The user may not accept to immediately re-verify his identity **210** and snooze the re-verification to be done up to 1 hour later **211,** in which case the re-verification will be required again **209.** The user can *snooze* the re-verification up to 3 times. The snooze option is presented just three times, and at the third time, the user can only either accept to re-verify or decline the re-verification. Once the user accepts the re-verification process, the *Scheduled identity re-verification process* described in this document is executed. When the user either accepted to run identity re-verification process **212** or declined to run that process **211,** the obtained result is processed and stored in the service provider's systems **213,** and it is made available in the user account. Once the re-verification process has been requested to the user, and possibly a result is obtained and stored, the user is always able to keep using the tracking device **214.** As per the re-verification schedule that has been established for the user and his associated tracking device, a new re-verification may be needed **215,** in which case the re-verification can be required again in the tracking device **209.** If no more re-verifications are required, the user will continue to use the tracking device **216** until the date to generate the results for the continuous identity verification **217.** Once the continuous identity verification results are generated **217,** the user can continue to use the tracking device without interruption. The service provider will have the necessary data and information to produce the necessary results to personalize offers of products and services, given personalization is based on "identity certified" tracking data generated by the user's tracking device.

**Generating the Certified Fitness Pair**

The Certified Fitness Pair (CFP) is a pair of numbers that expresses the level of fitness of a given user, based on the "identity certified" tracking data generated by a tracking device that has been used by that user during a specific period.

The CFP can be generated once the *Continuous usage and identity verification process* has been executed for a user "U" during a period of "T" days, allowing the service provider to continuously collect "identity certified" fitness tracking data from that user. In this case, during "T" days, that correspond to a specific number of weeks "W" (where "W" = "T"/7), a number "V" of re-verifications will have been done (depending on how the *Configuration process to deliver the service* was set). The number of successful identity re-verifications as "SV".

To generate the CFP, it is necessary to obtain from the user account "identity certified" tracking data that will represent:

- Time of physical activity performed by the user, allowing to classify that activity as:

  ◦ *Moderate activity:* time spent (in minutes) by the user walking or in any form of physical movement that is not classified in the user data as a sports workout such as running, cycling, swimming, skiing, team sports, etc.
  ◦ *Intense activity:* time spent (in minutes) by the user performing a specific sports workout that requires physical movement. Examples of those workouts include, and are not limited to: running, cycling, swimming, skiing, climbing, tennis, squash, or performing a team sport. This time is classified as a particular sports activity in the user data.

- The number of successful identity re-verifications "SV".
- The number of weeks "W" that the process of *Continuous usage and identity verification process* was executed for.

The CFP is a pair that includes the *Activity Level* of the user and the *level of confidence on the identity certification* for the tracking data.

*CFP = (Activity Level, Level of confidence in identity certification)*

The ***Activity Level*** is capped between 1 and 10, and it is calculated as follows:

- Calculate the ***Raw Activity Level,*** as follows:

$$\text{Raw Activity Level} = \frac{Moderate\ activity + 2\ (Intense\ activity)}{30}$$

- If the ***Raw Activity Level*** is in the range [1, 10], the value of ***Activity Level*** is equal to ***Raw Activity Level.***
- If ***Raw Activity Level*** is lower than 1, then ***Activity Level*** is 1.
- If ***Raw Activity Level*** is higher than 10, then ***Activity Level*** is 10.

The ***Level of confidence in identity certification*** (LCIC) is calculated as follow:

$$Level\ of\ confidence\ on\ identity\ certification = \frac{SV}{W}$$

Where SV and W have been previously defined in this section.

The Certified Fitness Pair is generated based on the "identity certified" fitness tracking data of a specific user, and it can be used by the service provider (or a third party) to customize offers of products or services for that user. Example of these service providers or third parties include, and are not limited to:

- Health coaching services.
- Fitness coaching services.
- Health insurance companies or brokers.
- Life insurance companies or brokers.

**Generating the certified movement data**

The Certified Moving Data (CMD) expresses the level and qualities of a given user's GPS movement, based on the "identity certified" GPS tracking data generated by a tracking device that has been used by that user during a specific period.

The CMD can be generated once the ***Continuous usage and identity verification process*** has been executed for a user "U" during a period of "T" days, allowing the service provider to continuously collect "identity certified" GPS tracking data from that user. In this case, during "T" days, that correspond to a specific number of weeks "W" (where "W" = "T"/7), a number "V" of re-verifications will have been done (depending on how the ***Configuration process to deliver the service*** was set). The number of successful identity re-verifications as "SV".

For this document, a "Moving session" is when the user starts a physical movement to change his location over a specific time, allowing a GPS tracking device to record his activity. After the changes in locations are recorded, the tracking device data is used to generate a GPX file with a record of those movements. That GPX file represents the "Moving session". Therefore, for a "moving session" there will be an average speed, total distance, and maximum speed. For any partial distance in the whole distance, a new partial average speed can be calculated.

To generate the CMD for a specific user, for a given number of days "T" or a number weeks "W", it is necessary to obtain from the user account "identity certified" tracking data that will contain:

- All the "moving sessions," in the form of their representative GPX files that the user performed during the given number of days "T" or the given number of weeks "W". The number of days "T", or the number of weeks "W", will be delimited by specific dates.

- The number of successful identity re-verifications "SV" executed during the "W" weeks.

The CMD is a list of numbers, optionally accompanied by the list of GPX files that represent all the "moving sessions" for the user the CMD is calculated for, as follows:

- The number of ***moving sessions*** performed during the number of weeks "W".

- The average distance for the *moving sessions* performed during the number of weeks "W".

- The average speed for the *moving sessions* during the number of weeks "W".

$$Level\ of\ confidence\ on\ identity\ certification = \frac{SV}{W}$$

- Optionally, the GPX files for the moving sessions during the number of weeks "W".

The Certified Movement Data is generated based on the "identity certified" GPS tracking data of a specific user, and it can be used by the service provider (or a third party) to customize offers of products or services for that user. Example of these service providers or third parties include, and are not limited to:

- Health coaching services.
- Fitness coaching services.
- Health insurance companies or brokers.
- Life insurance companies or brokers.
- Car insurance companies or brokers.
- Fleet management service providers.

**Claims**

1.  A computer-implemented method to re-verify the identity of the user using a tracking device, to generate "identity certified" tracking data, comprising:

    a. Allowing the user to create a user account and requesting a government-issued photo-id to verify his identity.
    b. Capturing a photo or video of the user to verify the authenticity or ownership of the provided photo ID
    c. Allowing the user to use the tracking device and generate tracking data with it.
    d. Asking the user to re-verify his identity, by obtaining a new photo or video of the user's face to ensure he is the one that registered the tracking device to be used.
    e. Allowing the user to keep using the tracking device, regardless of the result of identity re-verification.

2.  The method of claim **1,** wherein the data comprises at least one of the following fitness tracking metrics: steps taken during the day, active time during the day, calories burned during the day, distance covered during the day.

3.  The method of claim **1,** wherein the data comprises at least one of the following fitness tracking metrics: steps taken during the week, active time during the week, calories burned during the week, distance covered during the week.

4.  The method of claim **1,** wherein the data comprises location tracking data, including but not limited to GPX files or any other format that replicates the functionality of GPX files.

5.  The method of claim **1,** wherein the tracking device generating the tracking data is a mobile smartphone, a fitness tracking device, a wearable device, or a GPS tracking device.

6.  The method of claim **1,** wherein the camera used to take the picture or video of the user is embedded in the tracking device or accessed by interacting via network or Bluetooth with a software program running in another device such as a smartphone.

7.  A method to offer customized offer of services and products, in the areas of sports, fitness or health services, to users of fitness tracking devices; that method comprising:

    a. Validating the initial identity of the user.
    b. Re-validating the user's identity as he generates data with the fitness tracking device during a close or open period.
    c. Using the fitness data coming from the tracking device to estimate the fitness level of the user, whose identity has been verified more than once during the device's usage.

d. Using the fitness level estimation to customize offers of services and products.

8. The method of claim **7,** where the fitness tracking device is comprised of at least one of the following: a wearable device, a mobile smartphone, a GPS tracking device, or a Personal Digital Assistant device with GPS tracking capabilities.

9. The method of claim **7,** to generate the Certified Fitness Pair or any of its components as therein described in the section ***Generating the Certified Fitness Pair.***

10. A method to offer customized offer of services and products, in the areas of sports, health or insurance, to users of GPS tracking devices; that method comprising:

a. Validating the initial identity of the user.
b. Re-validating the user's identity as he generates data with the GPS tracking device during a close or open period.
c. Using the GPS tracking data to qualify the movements, or location changes, of the user. That qualification can include the Certified Movement Details as therein described.
d. Using the qualities of the locations changes of the user to customize offers of services and products.

11. The method of claim **10,** where the GPS tracking device is comprised of at least one of the following: a wearable device, a mobile smartphone, a GPS tracking device, or a Personal Digital Assistant device with GPS tracking capabilities.

12. The method of claim **10,** to generate the Certified Movement Data or any of its components as therein described in the section ***Generating the Certified Movement Data.***

13. A method to schedule and require identity verifications for users of tracking devices, comprising the following steps implemented in a software program:

a. Setting a period, as a number of days or weeks, to run identity verifications for.
b. In the same computer program, setting a number of verifications, to be performed during the number set period.

i. The number of verifications can be derived from an expected Verification Rate, the latter being defined therein in the section ***Configuration process to deliver the service.***

c. Arranging the number of verifications in a calendar view to indicate the exact dates when those identity verifications will be performed.

i. The dates can be manually chosen, or randomly generated by a software, to be placed in the calendar view.

d. Setting the valid daily times for when the identity verifications will happen, being able to select hourly ranges or specific times during the day.
e. Indicating the permissible tracking device usage situations that will allow the scheduled identity verifications to happen. An identity verification may happen at any time different than when the tracking device is registering location changes, or when the user has not indicated to the tracking device not to produce any interruption or to block any notification.
f. Whenever the identity verification cannot be requested, given the lack of a permissible tracking device usage situation, it will be requested as soon as possible.

Figure 1

For a user "U" the data collection period "T" is set as a number of weeks or a number of days.
100

For the user "U" a number of re-verifications "V" is set
101

Verification rate "VR" is set
102

Re-verifications are set in a regular schedule
103

Re-verifications are set in an aleatory or arbitrary way across the period "T"
104

Permissible daily times are set for the re-verifications
105

Permissible usage situations for re-verifications are set
106

## Figure 2

```
                              ┌──────────────────┐
                              │ User can not use │
                              │   the service    │
                              │       218        │
                              └──────────────────┘
                                       ▲
                                       │ No
┌──────────────┐   ┌──────────────┐  ◇─────────◇   ┌──────────────┐   ┌──────────────┐   ┌──────────────┐   ┌──────────────┐
│ User creates a│  │   Identity   │  │ Identity  │  │User identity is│  │Encrypted user│  │Tracking device│ │ User account  │
│service account│→ │ verification │→ │ verified  │→ │associated to the│→│identity stored│→│gets the re-  │→ │and device are │
│     201       │  │   process    │  │   203     │Yes│tracking device │  │in tracking dev│  │verification  │  │ready to be used│
│               │  │     202      │  │           │  │     204       │  │    205       │  │schedule 206  │  │     207       │
└──────────────┘   └──────────────┘  ◇─────────◇   └──────────────┘   └──────────────┘   └──────────────┘   └──────────────┘
```

User creates a service account 201

Identity verification process 202

Identity verified 203 — No → User can not use the service 218

Identity verified 203 — Yes → User identity is associated to the tracking device 204

Encrypted user identity stored in tracking device 205

Tracking device gets the re-verification schedule 206

User account and device are ready to be used 207

User continue to use the tracking device 214

Result is given and processed 213

Identify re-verification process 212

User accept to re-verify 210

Identify re-verification is asked in the tracking device 209

User uses the tracking device 208

User accept to re-verify 210 — Yes → Identify re-verification process 212

User accept to re-verify 210 — No → Snoozed or declined? 211

Snoozed or declined? 211 — Snoozed → Identify re-verification is asked in the tracking device 209

Snoozed or declined? 211 — Declined → Result is given and processed 213

Re-verification needed 215

Re-verification needed 215 — Yes → Identify re-verification is asked in the tracking device 209

Re-verification needed 215 — No → User continue to use the device tracking device 216

Result on continuous identity verification is generated 217

EP 4 050 860 A1

10

Figure 3

| Request Photo ID 301 | → | Get and store picture of photo id 302 | → | Get and store picture or video of the user face 303 | → | Validate authenticity of photo ID 304 | → | Validate photo ID against user picture or video 305 | → | Produce, store and communicate result 306 |

Figure 4

Get picture or video of the user face
401

Validate new picture or video of the user against the stored picture or video
402

Identity verified
403

No

Validate new picture or video of the user against stored photo ID
404

Identity verified
405

Yes

No

Yes

Produce, store and communicate result
406

# Figure 5

For the user "U" a Certified Fitness Index is generated

The Certified Fitness Index can be used for customized medical, fitness and insurance services

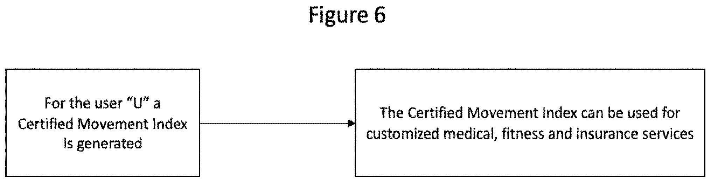

# Figure 6

```
┌──────────────────────────┐                    ┌────────────────────────────────────────────┐
│     For the user "U" a   │                    │   The Certified Movement Index can be used for │
│  Certified Movement Index │ ─────────────────▶ │  customized medical, fitness and insurance services │
│       is generated        │                    │                                            │
└──────────────────────────┘                    └────────────────────────────────────────────┘
```

Europäisches
Patentamt

European
Patent Office

Office européen
des brevets

## EUROPEAN SEARCH REPORT

**Application Number**

EP 21 15 9808

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/279528 A1 (SLABY JIRI [US] ET AL) 18 September 2014 (2014-09-18) * the whole document * ----- | 1-6 | INV. H04L29/06 A61B5/103 H04W12/06 |
| X | US 2019/095602 A1 (SETLAK DALE [US] ET AL) 28 March 2019 (2019-03-28) * the whole document * ----- | 1-6 | |

**TECHNICAL FIELDS SEARCHED (IPC)**

H04L
A61B
H04W

~~The present search report has been drawn up for all claims~~

| Place of search | Date of completion of the search | Examiner |
|---|---|---|
| The Hague | 26 July 2021 | Gioè, Pietro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

Europäisches
Patentamt

European
Patent Office

Office européen
des brevets

Application Number

EP 21 15 9808

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
## SHEET B

Application Number

EP 21 15 9808

The Search Division considers that the present European patent application does not comply with the requirements of unity of invention and relates to several inventions or groups of inventions, namely:

```
1. claims: 1-6

       method for re-verification of user identity
                    ---

2. claims: 7-12

       methods to offer customized offers to users
                    ---

3. claim: 13

       method for authentication scheduling
                    ---
```

**EP 4 050 860 A1**

## ANNEX TO THE EUROPEAN SEARCH REPORT
## ON EUROPEAN PATENT APPLICATION NO.

EP 21 15 9808

26-07-2021

| Patent document cited in search report | | Publication date | Patent family member(s) | | Publication date |
|---|---|---|---|---|---|
| US 2014279528 | A1 | 18-09-2014 | NONE | | |
| US 2019095602 | A1 | 28-03-2019 | US 2019095602 | A1 | 28-03-2019 |
| | | | US 2021004444 | A1 | 07-01-2021 |

EPO FORM P0459